# EUROPEAN PATENT SPECIFICATION

(11) **EP 2 778 522 B1**
(45) Date of publication and mention of the grant of the patent: **16.01.2019**
(21) Application number: 12848565.3
(22) Date of filing: 31.10.2012
(51) Int. Cl.: F23G 5/24, F23C 10/01, F23L 7/00, F23G 7/06, F23G 7/07

(54) **FLAME-FREE CATALYTIC THERMAL OXIDATION INCINERATION DEVICE**
FLAMMLOSE KATALYTISCHE THERMISCHE OXIDATIONSVERBRENNUNGSVORRICHTUNG
DISPOSITIF D'INCINÉRATION À OXYDATION THERMIQUE CATALYTIQUE SANS FLAMME

(30) Priority: 09.11.2011 KR 20110116204
(43) Date of publication of application: 17.09.2014
(73) Proprietor: Mat Plus Co., Ltd., Anseong-si, Gyeonggi-do 456-823 (KR)
(72) Inventor: KIM, Dong Soo, Pyeongtaek-si Gyeonggi-do 450-753 (KR)
(74) Representative: Zardi, Marco
(86) International application number: PCT/KR2012/009046
(87) International publication number: WO 2013/069922

(56) References cited:
- GB-A- 2 366 204
- JP-A- 2000 014 595
- JP-A- 2000 274 629
- JP-A- 2006 081 958
- JP-A- 2006 081 958
- KR-Y1- 0 140 806
- KR-Y1- 0 140 806
- US-A1- 2003 031 970
- US-B2- 7 008 219

## Description

### Technical Field

The present invention relates to a flame-free catalytic thermal oxidation incineration device, and more particularly, to a flame-free catalytic thermal oxidation incineration device that may be used to treat various environmentally harmful substances generated from an oil-refining facility, processes of manufacturing semiconductors and light-emitting diode (LED) displays, and the like.

### Background Art

Various technologies, for example, a regenerative oxidation method, a catalytic thermal oxidation method, and a flameless thermal oxidation method, may be used to treat environmentally harmful substances generated from an oil refining treatment process including a heavy oil refining treatment at an oil refinery and a process of manufacturing semiconductors and light-emitting diode (LED) displays and panels. The technologies may be used to completely decompose, by incinerating, the substances including ammonia generated during the processes into hydrogen and nitrogen and emit those gases harmless to environment.

The technologies may be used to completely combust the substances harmful to a human body, for example, toluene, benzene, ethylene, and ammonia, into carbon dioxide, water vapor, hydrogen, nitrogen, and the like that are harmless to the human body. For this purpose, it may be required that nitrogen compounds such as ammonia should not generate NOx during combustion. When NOx is generated, secondary air pollution may arise.

Among the foregoing technologies, the flameless thermal oxidation method may be applied to achieve a higher rate of complete combustion and a higher efficiency for fuel supply in comparison to the regenerative oxidation method and the catalytic thermal oxidation method.

However, an existing flame-free thermal oxidation incineration device to which the flameless thermal oxidation method is applied may not achieve a desirable result because such device may generate a few hundred parts per million (ppm) of concentration of the harmful substances such as NOx when flameless thermal oxidation incineration is performed by injecting a reactant including the harmful substances into an incinerating furnace of the device. Reasons for the undesirable result may include preheating the incinerating furnace without preheating the reactant, absence of a catalyst, and instable energy supply due to a high-temperature oxidation or deterioration of the heater of the device.

US 2003/0031970A1 discloses a boil-off gas processing system for reliably burning a boil-off gas. JP 2006 081958 A discloses a garbage treatment machine in which clogging with fine particles contained in air to be treated from a garbage treatment part is not generated. GB 2366204 discloses a deodorization apparatus wherein a steam produced in the process of drying and fermentation and containing bad smell components is passed through an inner space of the preheated members to preheat the steam. KR0140806 discloses a trash burner.

### Disclosure of Invention

### Technical Goal

An aspect of the present invention provides a flame-free catalytic thermal oxidation incineration device that may greatly reduce a concentration of harmful substances, for example, NOx, to be a few parts per million (ppm).

Another aspect of the present invention provides a flame-free catalytic thermal oxidation incineration device that may include a heater provided in a structure to prevent high-temperature oxidation and may be provided in a simple structure to be assembled and disassembled as a need arises.

### Technical Solutions

According to an aspect of the present invention, there is provided a flame-free catalytic thermal incineration device according to claim 1.

The heater provided in the reactant heating and feeding unit may consist of heating wire and an electrical contact unit, wherein the electrical contact unit may be disposed in a lower portion of the heater, and the heating wire may be disposed to be extended upwards from the electrical contact unit.

The opening formed in the lower portion of the reactant heating and feeding unit may include a plurality of air pores.

The heater may be heated up to approximately 800°C through 1200°C.

The metallic oxide catalyst may include SiO₂, Al₂O₃, Fe₂O₃, and MnOₓ.

The housing of the incinerating furnace may include a protruded fixing unit at both ends to allow an entirety of the housing to rotate on the protruded fixing unit.

### Brief Description of Drawings

FIG. 1 is a perspective view illustrating an overall exterior of a flame-free catalytic thermal oxidation incineration device according to an embodiment of the present invention.
FIG. 2 is a schematic cross-sectional view of the flame-free catalytic thermal oxidation incineration device of FIG. 1 for illustrating an operation of main components according to an embodiment of the present invention.
FIG. 3 is a perspective cut view of an internal configuration of an incinerating furnace of the flame-free catalytic thermal oxidation incineration device of FIG. 1 according to an embodiment of the present invention.
FIG. 4 is a cross-sectional chart of an oxygen feeding unit illustrating an oxygen feeding channel according to an embodiment of the present invention.
FIG. 5 is an exploded perspective view of a reactant heating and feeding unit illustrating a configuration of a heater included in a flame-free catalytic thermal oxidation incineration device according to an embodiment of the present invention.
FIG. 6 is a planar view of a floor surface of an incinerating furnace according to an embodiment of the present invention.
FIG. 7 is a cross-sectional view illustrating an example in which an entirety of a housing of an incinerating furnace rotates on a protruded fixing unit provided in the housing of the incinerating furnace according to an embodiment of the present invention.
FIG. 8 are perspective views illustrating a housing of an incinerating furnace and an example in which the housing of the incinerating furnace rotated by the operation illustrated in FIG. 7 according to an embodiment of the present invention.

### [Reference Numerals of Drawings]

- 1000:: Flame-free catalytic thermal oxidation incineration device
- 100:: Housing
- 101:: Incinerating furnace
- 110:: Reactant inlet
- 120:: Oxygen feeding unit
- 121:: First pipe
- 123:: Disc
- 125:: Second pipe
- 127:: Gap
- 129, 139:: Air pores
- 135:: Heater
- 136:: Heating wire
- 137:: Electrical contact unit
- 160:: Protruded fixing unit
- 200:: Heat exchanger

### Best Mode for Carrying Out Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

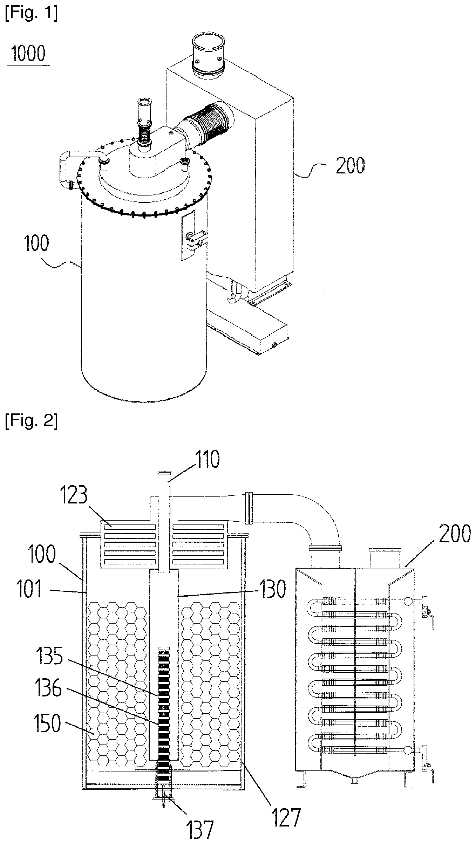

FIG. 1 is a perspective view illustrating an overall exterior of a flame-free catalytic thermal oxidation incineration device 1000 according to an embodiment of the present invention. FIG. 1 illustrates a housing 100 in which an incinerating furnace 101 is disposed, and a heat exchanger 200 that cools and emits a product of combustion generated from the incinerating furnace 101 and is connected to the incinerating furnace 101.

The device 1000 may schematically operate as follows.

A reactant including harmful substances may flow into the incinerating furnace 101 through a reactant inlet 110 disposed in an upper portion of the housing 100. In the meantime, air including oxygen may be supplied to the incinerating furnace 101 through a separate channel. After the reactant is combusted at a high temperature and at a high efficiency due to a metallic oxide catalyst added to the incinerating furnace 101, the product of the combustion may enter the heat exchanger 200 through an outlet, pass through the heat exchanger 200, and be emitted outside by being liquefied or cooled down to be in a state of gas.

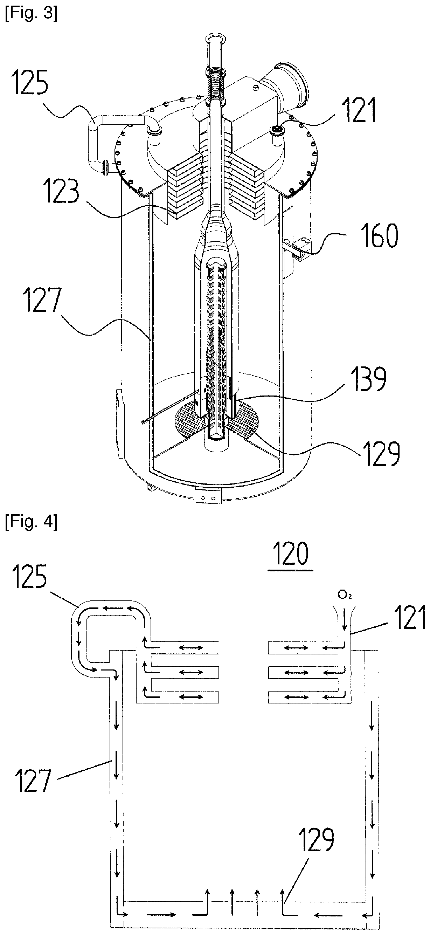

A detailed configuration and operation of the foregoing components will be further described with reference to FIGS. 2 and 3.

FIG. 2 is a schematic cross-sectional view of the flame-free catalytic thermal oxidation incineration device 1000 of FIG. 1 for illustrating an operation of main components. FIG. 3 is a perspective cut view of an internal configuration obtained by cutting a portion of the housing 100.

The incinerating furnace 101 may be assembled inside the housing 100 to have a gap from a surface of an inner wall of the housing 100. The reactant inlet 110 through which a reactant including harmful substances flows into the incinerating furnace 101 may be disposed in an upper portion of the housing 100. The reactant entering the incinerating furnace 101 through the reactant inlet 110 may flow into a lower portion of the incinerating furnace 101 through a reactant heating and feeding unit 130 connected to the reactant inlet 110.

The reactant heating and feeding unit 130 may be provided in a form of a chimney and include a heater 135. The heater 135 may include heating wire that may desirably spread up to approximately 1/2 through 2/3 of a total height of the reactant heating and feeding unit 130 provided in the form of the chimney. In virtue of an operation of the heater 135, the reactant entering through the reactant inlet 110 may be preheated before descending to a lower portion of the incinerating furnace 101 and thus, allowing the reactant to be easily and completely combusted. A lower portion of the reactant heating and feeding unit 130 may include an opening to discharge the reactant to an interior of the incinerating furnace 101, and more desirably to discharge the reactant through a plurality of air pores 139 as illustrated in FIG. 3.

Also, the interior of the incinerating furnace 101 may be filled with a catalyst 150 to facilitate complete combustion. The catalyst 150 may include at least one substance selected from a group of metallic oxides, for example, SiO₂, Al₂O₃, Fe₂O₃, and MnOₓ.

Oxygen required to combust the reactant may be fed through air pores 129 formed on a floor surface of the incinerating furnace 101. A channel of an oxygen feeding unit 120 through which the oxygen is fed will be described hereinafter.

The oxygen may be fed, through a first pipe 121, to a hollow disc 123 assembled to surround the reactant inlet 110 from an air container (now shown) disposed outside of the incinerating furnace 101 and containing oxygen. The disc 123 may be provided in plural and concentrically piled up one on another. The disc 123 and the first pipe 121 may be connected to each other with a nozzle into which oxygen flows. Thus, the injected oxygen may fill in the disc 123 and absorb a portion of a heat supplied by the heater 135. Also, the injected oxygen may move to a second pipe 125 connected to another end of the disc 123. As illustrated in FIG. 3, the second pipe 125 may be outwardly protruded from the housing 100, although the second pipe 125 may return to a gap 127 between the housing 100 and the incinerating furnace 101. The oxygen may descend to the lower portion of the housing 100 through the gap 127 between the surface of the inner wall and the incinerating furnace 101. Thus, the oxygen may be fed into the incinerating furnace 101 through the air pores 129 formed on the floor surface of the incinerating furnace 101. A virtue of the channel of the oxygen configured in this manner will be described hereinafter.

The oxygen may absorb the heat while remaining in the disc 123 and thus, enabling rapid combustion. The oxygen may descend downwards by surrounding the surface of the inner wall of the housing 100 and thus, adding a thermal barrier effect of the housing 100. The oxygen may allow a high temperature of the interior of the incinerating furnace 101 to be maintained and raise the temperature of the oxygen to gain energy facilitating the combustion.

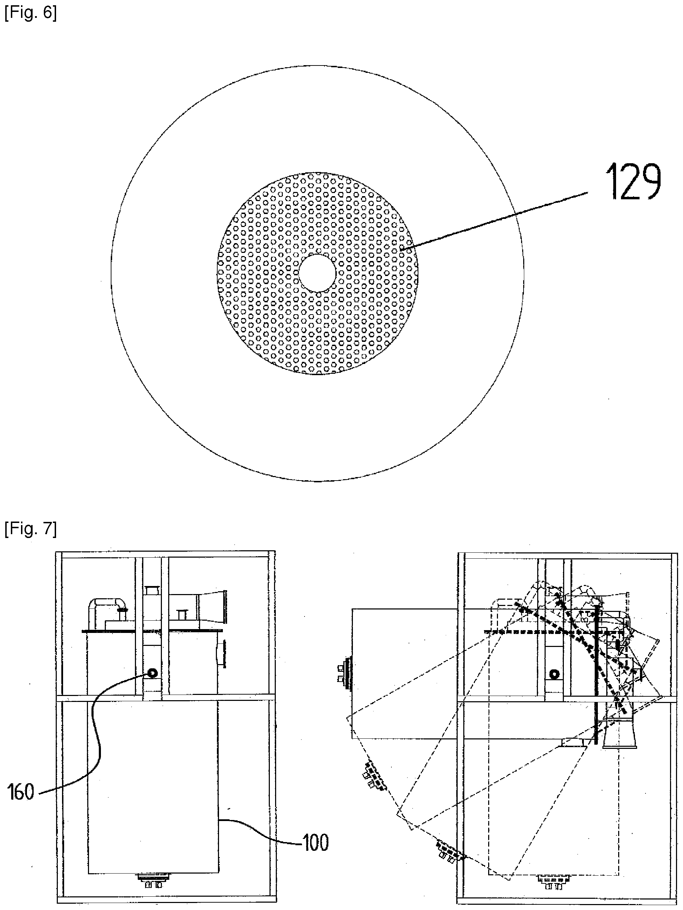

A detailed description of the channel through which the oxygen is fed is provided in conjunction with a configuration of the disc 123 with reference to FIG 4. A detailed planar view of the air pores 129 formed on the floor surface of the incinerating furnace 101 is provided with reference to FIG. 6.

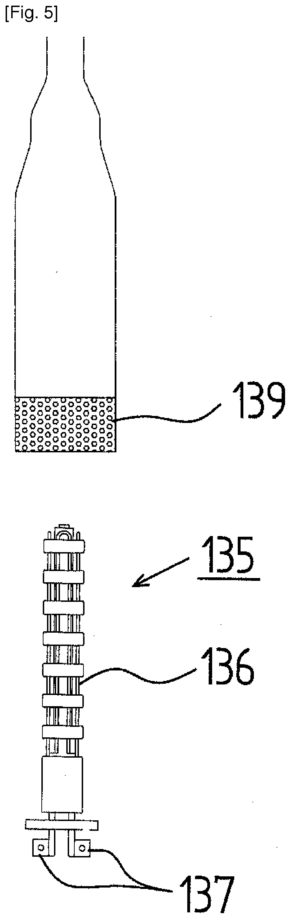

FIG. 5 illustrates a detailed configuration of the heater 135.

The heater 135 may include heating wire 136 and an electrical contact unit 137. The electrical contact unit 137 may be disposed on a bottom end, and the heating coil 136 may be disposed upwards to be extended from the electrical contact unit 137. For example, when the electrical contact unit 137 is disposed on a top end, high-temperature oxidation may be expedited in the electrical contact unit 137 because a high-temperature air current ascends upwards. Thus, a life of the heater 135 may be shortened or the heater 135 may operate erroneously. Hence, the electrical contact unit 137 may be provided to enable a cooling effect and the heating coil 136 may be designed to spread upwards to be exposed to a high temperature by disposing the electrical contact unit 137 in a lower portion of the incinerating furnace 101 and feeding oxygen to the lower portion of the incinerating furnace 101. The heating coil 136 may be desirably provided with Kanthal, but not limited thereto. As illustrated in FIG. 5, the heating coil 136 may be designed to have a form of repeated paths to provide a sufficient amount of heat. The heater 135 may be heated up to approximately 800°C through 1200°C and accordingly, high combustion efficiency may be achieved and Nox may rarely occur.

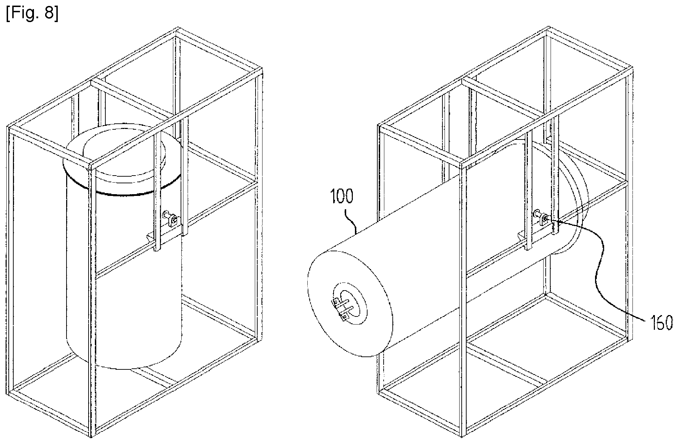

Due to characteristics of the foregoing configuration, the floor surface of the housing 100 may need to be opened and closed for disassembling and assembling of the components, for example, the heater 135, to replace the components. Thus, the floor surface of the housing 100 may be designed to face an operator by rotating an entirety of the housing 100 around a fixed point. As illustrated in FIG. 7, a protruded fixing unit 160 may be provided at both ends of the housing 100. When the housing 100 is allowed to rotate on the protruded fixing unit 160 as illustrated in FIG. 7, the floor surface of the housing 100 may be positioned opposite to the operator as illustrated in FIG. 8.

The housing 100 and the incinerating furnace 101 may be fabricated with stainless steel with oxidation resistance at an elevated temperature. Also, SUS 310, 304, 316, and the like may be used to fabricate the respective components based on their characteristics.

### Industrial Availability

The present invention may be effectively used to treat various environmentally harmful substances generated from oil-refining facilities, processes of manufacturing semiconductors and light-emitting diode (LED) displays, and the like.

## Claims

1. A flame-free catalytic thermal incineration device (1000), comprising:
an incinerating furnace (101) disposed in a housing (100) and including air pores (129);
a reactant inlet (110) capable to allow a reactant to be combusted to flow into the incinerating furnace (101);
a reactant heating and feeding unit (130) extending downward stream from the reactant inlet (110), and including a heater (135) and an opening in a lower portion of the reactant heating and feeding unit (130);
an oxygen feeding unit (120) capable of feeding oxygen through the air pores (129) of the incinerating furnace (101); and
a metallic oxide catalyst filled in the incinerating furnace (101),
**characterized in that** a plurality of the air pores (129) of the incinerating furnace (101) is formed on a floor surface of the incinerating furnace (101),
wherein the oxygen feeding unit (120) is provided to lead to a surface of an inner wall of the housing (100) of the incinerating furnace (101) capable of allowing oxygen to descend along the surface of the inner wall of the housing (100) of the incinerating furnace (101) and to be fed through the air pores (129) on the floor surface of the incinerating furnace (101),
wherein the oxygen feeding unit (120) comprises:
a hollow disc (123) disposed surrounding the reactant inlet (110);
a first pipe (121) in contact with an end of the disc leading to the hollow disc (123) and capable of allowing oxygen to flow into the hollow disc (123); and
a second pipe (125) in contact with another end of the disc leading to the hollow disc (123) and capable of feeding oxygen escaping from the hollow disc (123) to the surface of the inner wall of the housing (100) of the incinerating furnace (101).

2. The device of claim 1, wherein the heater (135) provided in the reactant heating and feeding unit (130) includes heating wire (136) and an electrical contact unit (137), and
wherein the electrical contact unit (137) is disposed at a lower portion of the heater (135), and the heating wire (136) is disposed extending upwards from the electrical contact unit (137).

3. The device of claim 1, wherein the opening formed at a lower portion of the reactant heating and feeding unit (130) includes a plurality of air pores (139).

4. The device of claim 1, wherein the heater (135) configured to be heated up to approximately 800°C through 1200°C.

5. The device of claim 1, wherein the metallic oxide catalyst includes SiO₂, Al₂O₃, Fe₂O₃, and MnOₓ.

6. The device of claim 1, wherein the housing (100) of the incinerating furnace (101) includes a protruded fixing unit at both ends to allow an entirety of the housing (100) to rotate on the protruded fixing unit.

## Patentansprüche

1. Flammenlose katalytische thermische Verbrennungsvorrichtung (1000), umfassend:
einen Verbrennungsofen (101), der in einem Gehäuse (100) angeordnet ist und Luftporen (129) umfasst;
einen Reaktionsmitteleinlass (110), der in der Lage ist, es einem zu verbrennenden Reaktionsmittel zu erlauben, in den Verbrennungsofen (101) zu strömen;
eine Reaktionsmittelerwärmungs- und zuführeinheit (130), die sich stromabwärts von dem Reaktionsmitteleinlass (110) erstreckt, und eine Heizeinrichtung (135) und eine Öffnung in einem unteren Abschnitt der Reaktionsmittelerwärmungs- und zuführeinheit (130) umfasst;
eine Sauerstoffzuführeinheit (120), die in der Lage ist, durch die Luftporen (129) des Verbrennungsofens (101) Sauerstoff zuzuführen; und
einen Metalloxidkatalysator, der in den Verbrennungsofen (101) gefüllt ist,
**dadurch gekennzeichnet, dass** eine Vielzahl der Luftporen (129) des Verbrennungsofens (101) an einer Bodenoberfläche des Verbrennungsofens (101) gebildet ist,
wobei die Sauerstoffzuführeinheit (120) so vorgesehen ist, dass sie zu einer Oberfläche einer Innenwand des Gehäuses (100) des Verbrennungsofens (101) führt, die in der Lage ist, zu erlauben, dass Sauerstoff entlang der Oberfläche der Innenwand des Gehäuses (100) des Verbrennungsofens (101) absinkt und durch die Luftporen (129) an der Bodenoberfläche des Verbrennungsofens (101) zugeführt wird,
wobei die Sauerstoffzuführeinheit (120) umfasst:
eine hohle Scheibe (123), die so angeordnet ist, dass sie den Reaktionsmitteleinlass (110) umgibt;
ein erstes Rohr (121) in Kontakt mit einem Ende der Scheibe, das zu der hohlen Scheibe (123) führt und in der Lage ist, zu erlauben, dass Sauerstoff in die hohle Scheibe (123) strömt; und
ein zweites Rohr (125) in Kontakt mit einem anderen Ende der Scheibe, das zu der hohlen Scheibe (123) führt und in der Lage ist, Sauerstoff zuzuführen, der von der hohlen Scheibe (123) zu der Oberfläche der Innenwand des Gehäuses (100) des Verbrennungsofens (101) entweicht.

2. Vorrichtung nach Anspruch 1, wobei die Heizeinrichtung (135), die in der Reaktionsmittelerwärmungs- und zuführeinheit (130) vorgesehen ist, einen Heizdraht (136) und eine elektrische Kontakteinheit (137) umfasst, und
wobei die elektrische Kontakteinheit (137) an einem unteren Abschnitt der Heizeinrichtung (135) angeordnet ist, und der Heizdraht (136) so angeordnet ist, dass er sich von der elektrischen Kontakteinheit (137) nach oben erstreckt.

3. Vorrichtung nach Anspruch 1, wobei die Öffnung, die an einem unteren Abschnitt der Reaktionsmittelerwärmungs- und zuführeinheit (130) gebildet ist, eine Vielzahl von Luftporen (139) umfasst.

4. Vorrichtung nach Anspruch 1, wobei die Heizeinrichtung (135) dazu konfiguriert ist, auf ungefähr 800°C bis einschließlich 1200°C erwärmt zu werden.

5. Vorrichtung nach Anspruch 1, wobei der Metalloxidkatalysator SiO₂, Al₂O₃, Fe₂O₃, und MnOₓ umfasst.

6. Vorrichtung nach Anspruch 1, wobei das Gehäuse (100) des Verbrennungsofens (101) eine vorstehend gebildete Fixierungseinheit an beiden Enden umfasst, um zu erlauben, dass eine Gesamtheit des Gehäuses (100) sich auf der vorstehend gebildeten Fixierungseinheit dreht.

## Revendications

1. Dispositif d'incinération thermique catalytique sans flamme (1000), comprenant :
- un foyer d'incinération (101) placé dans un logement (100) et incluant des pores à air (129),
- une entrée pour réactif (110) pouvant permettre à un réactif à consumer de circuler dans le foyer d'incinération (101),
- une unité de chauffage et d'alimentation en réactif (130) s'étendant en aval de l'entrée pour réactif (110) et incluant un chauffage (135) et une ouverture dans une partie inférieure de l'unité de chauffage et d'alimentation en réactif (130),
- une unité d'alimentation en oxygène (120) capable d'alimenter en oxygène par les pores à air (129) le foyer d'incinération (101) et
- un catalyseur d'oxyde métallique rempli dans le foyer d'incinération (101),
- **caractérisé en ce qu'**une pluralité de pores à air (129) du foyer d'incinération (101) est formée sur une surface de sol du foyer d'incinération (101),
- où l'unité d'alimentation en oxygène (120) est prévue pour mener à une surface d'une paroi interne du logement (100) du foyer d'incinération (101) pouvant permettre à l'oxygène de descendre le long de la surface de la paroi interne du logement (100) du foyer d'incinération (101) et d'être alimenté par les pores à air (129) sur la surface du sol du foyer d'incinération (101),
- où l'unité d'alimentation en oxygène (120) comprend :
- un disque creux (123) placé de manière à entourer l'entrée du réactif (110),
- un premier tuyau (121) en contact avec une extrémité du disque conduisant au disque creux (123) et pouvant permettre à l'oxygène de circuler dans le disque creux (123), et
- un deuxième tuyau (125) en contact avec une autre extrémité du disque conduisant au disque creux (123) et pouvant alimenter en oxygène s'échappant du disque creux (123) à la surface de la paroi interne du logement (100) du foyer d'incinération (101).

2. Dispositif selon la revendication 1, **caractérisé en ce que** le chauffage (135) prévu dans l'unité de chauffage et d'alimentation de réactif (130) inclut un fil chauffant (136) et une unité de contact électrique (137) et
- où l'unité de contact électrique (137) est placée au niveau d'une partie inférieure du chauffage (135) et le fil chauffant (136) est placé s'étendant en amont de l'unité de contact électrique (137).

3. Dispositif selon la revendication 1, **caractérisé en ce que** l'ouverture formée au niveau d'une partie inférieure de l'unité de chauffage et d'alimentation de réactif (130) inclut une pluralité de pores à air (139).

4. Dispositif selon la revendication 1, **caractérisé en ce que** le chauffage (135) configuré pour être chauffé à des températures autour de 800°C à 1200°C.

5. Dispositif selon la revendication 1, **caractérisé en ce que** le catalyseur oxyde métallique inclut le SiO₂, Al₂O₃, Fe₂O₃ et MnOₓ.

6. Dispositif selon la revendication 1, **caractérisé en ce que** le logement (100) du foyer d'incinération (101) inclut une unité de fixation protubérante au niveau des deux extrémités pour permettre à l'ensemble du logement (100) de pivoter sur l'unité de fixation protubérante.
